# EUROPÄISCHE PATENTANMELDUNG

(11) **EP 4 803 286 A1**
(43) Veröffentlichungstag der Anmeldung: **09.09.2026**
(21) Anmeldenummer: 26161772.4
(22) Anmeldetag: 02.03.2026
(51) Int. Cl.: B29C 55/02

(54) **LUFTDÜSE SOWIE RECKANLAGE MIT LUFTDÜSE**

(30) Priorität: 07.03.2025 DE 102025108788
(71) Anmelder: Brückner Maschinenbau GmbH, 83313 Siegsdorf (DE)
(72) Erfinder: Wettemann, Anton, 83377 Vachendorf (DE); Loider, Andreas, 83313 Siegsdorf (DE)
(74) Vertreter: Flach Bauer & Partner Patentanwälte mbB

(57) **Zusammenfassung**

Eine verstellbare Luftdüse (18) für einen Ofen (12) einer Reckanlage (10), insbesondere einer Quer-, Längs- und/oder Simultan-Reckanlage, hat ein Gehäuse (40), Auslassöffnungen (38), Kanäle (42) und eine Verstellvorrichtung (44). Innerhalb des Gehäuses (40) ist ein Stauraum (46) gebildet. Die Kanäle (42) weisen jeweils an ihrem ersten Ende einen Einlass (48) auf, der in den Stauraum (46) mündet, und an ihrem zweiten Ende münden sie mittels der Auslassöffnungen (38) in die Umgebung des Gehäuses (40), insbesondere in den Ofen (12). Die Verstellvorrichtung (44) weist ein bewegliches Verschlusselement (52) zur Veränderung eines Strömungsquerschnitts der Einlässe (48) der Kanäle (42) auf, wobei die Verstellvorrichtung (44) derart ausgebildet ist, dass das Verschlusselement (52) zwischen verschiedenen Stellungen bewegt werden kann, wodurch der Strömungsquerschnitt wenigstens eines der Einlässe (48) verändert wird.

Ferner wird eine Reckanlage (10) bereitgestellt.

## Beschreibung

Die Erfindung betrifft eine Luftdüse sowie eine Reckanlage mit einer solchen Luftdüse.

Reckanlagen finden insbesondere bei der Herstellung von Kunststofffolien Anwendung. Üblicherweise wird in solchen Anlagen die zu reckende Folie mittels eines Folientransportsystems in einer Abzugsrichtung durch einen Ofen der Anlage bewegt. Im Ofen wird die zu reckende Folie vor dem Reckvorgang erwärmt und auch beim, während und nach dem Reckvorgang temperiert. Anschließend wird die gereckte Folie im Ofen gekühlt.

Zum Temperieren des Ofens bzw. der Folie kommen Düsenkästen zum Einsatz, die sich in Querrichtung entlang der Folie erstrecken und die eine Vielzahl an Auslassöffnungen aufweisen, die zur Folie gerichtet sind. Durch die Düsenkästen wird temperierte Luft geführt, die durch die Auslassöffnungen in Richtung Folie strömt und diese erwärmt oder kühlt.

Solche Luftdüsen temperieren die Folie bzw. den Laufbereich der Folie entlang der Querrichtung gleichermaßen. Dies kann jedoch problematisch sein, da in den Außenbereichen der Folien, in denen die Folie durch die Kluppen gegriffen ist, sich die Folie langsamer abkühlt, da die Kluppen zum einen eine hohe thermische Masse haben und langsamer auskühlen, und zum anderen durch die Kluppen heiße Luft aus dem Ofen gefördert wird. Aufgrund des unterschiedlichen Abkühlverhaltens und des damit verbundenen Schrumpfverhaltens der Außenbereiche entstehen in den Außenbereichen der Folie Wölbungen, die zu einer nicht planen Folie führen.

Es ist daher Aufgabe der Erfindung, eine Luftdüse und eine Reckanlage bereitzustellen, mit denen sich besonders plane Folien herstellen lassen.

Die Aufgabe wird gelöst durch eine verstellbare Luftdüse für einen Ofen einer Reckanlage, insbesondere einer Quer-, Längs- und/oder Simultan-Reckanlage, mit einem Gehäuse, mehreren Auslassöffnungen, mehreren Kanälen und einer Verstellvorrichtung. Innerhalb des Gehäuses ist ein Stauraum gebildet, und die Kanäle weisen jeweils an ihrem ersten Ende einen Einlass auf, der in den Stauraum mündet. An ihrem zweiten Ende münden die Kanäle mittels der Auslassöffnungen in die Umgebung des Gehäuses, insbesondere in den Ofen. Die Verstellvorrichtung weist ein bewegliches Verschlusselement zur Veränderung eines Strömungsquerschnitts der Einlässe der Kanäle auf, wobei die Verstellvorrichtung derart ausgebildet ist, dass das Verschlusselement zwischen verschiedenen Stellungen bewegt werden kann, wodurch der Strömungsquerschnitt wenigstens eines der Einlässe verändert wird.

Dadurch, dass mittels des Verschlusselements der Strömungsquerschnitt der Einlässe der Kanäle, die die Auslassöffnungen speisen, verändert werden kann, ist es möglich, verschiedene Abschnitte des Laufbereichs bzw. der Folie unterschiedlich stark mit Luft anzuströmen und somit unterschiedlich zu temperieren.

Zudem ermöglicht die Verstellvorrichtung eine einfache Änderung des Strömungsprofils, insbesondere im laufenden Betrieb der Reckanlage.

Auf diese Weise ist es möglich, die Folie optimal zu temperieren, beispielsweise die Außenabschnitte der Folie stärker zu kühlen, um ein gleichmäßiges Abkühlverhalten in der Folie zu erreichen, wodurch die Planarität der Folie verbessert wird.

Die Kanäle sind beispielsweise fluidisch voneinander getrennt.

Das Verschlusselement ist zum Beispiel im Stauraum angeordnet, insbesondere vollständig.

Die Luftdüse kann eine Lufteintrittsöffnung aufweisen, die fluidisch mit dem Stauraum verbunden ist.

In einer Ausgestaltung ist das Verschlusselement dazu ausgebildet, dass es die Einlässe der Kanäle verschließen kann, insbesondere wobei das Verschlusselement in zumindest zwei unterschiedlichen Stellungen eine unterschiedliche Anzahl an Einlässen verschließt. Auf diese Weise können Luftaustrittsöffnungen vollständig deaktiviert werden, wodurch die Temperierung bestimmter Abschnitte stark verringert wird.

In einer Ausführungsform weist das Verschlusselement eine Kante auf, die in einem Winkel zur Bewegungsrichtung des Verschlusselements angeordnet ist, wodurch eine kontinuierliche Veränderung des Strömungsquerschnitts bei Bewegung des Verschlusselementes erreicht wird.

Der Winkel ist größer als 0°, insbesondere kleiner als 20°, wobei der Winkel nach außen hin, d.h. von der Mitte weg geöffnet ist. Beispielsweise ist der Winkel zwischen 2° und 5°.

Für eine kompakte Bauweise können die Einlässe der Kanäle orthogonal zu den Auslassöffnungen und/oder vertikal orientiert sein; und/oder die Auslassöffnungen können an der Oberseite des Gehäuses angeordnet sein.

Beispielsweise verlaufen die Kanäle innerhalb des Gehäuses.

Unter "vertikal" wird hier senkrecht in "Bezug auf Erdboden" verstanden, wenn die Luftdüse ordnungsgemäß aufgebaut ist.

In einer Ausführungsform sind zumindest die Auslassöffnungen in einer oder mehreren Reihen angeordnet, insbesondere in einer oder mehreren Reihen in einer ersten Richtung, um die Luftströmung zur Folie über einen großen Bereich verändern zu können.

Beispielsweise ist jede Auslassöffnung einem Kanal zugeordnet. Es kann ein Kanal mehrere Auslassöffnungen haben.

In einer Ausgestaltung sind die Einlässe der Kanäle entlang einer ersten Richtung in einer Reihe angeordnet, wodurch die Verstellvorrichtung vereinfacht wird.

Auch Kanäle selbst können in einer Reihe angeordnet sein. Die erste Richtung der Reihe der Kanäle und die erste Richtung der Reihe der Auslassöffnungen sind gleich.

Denkbar ist auch, dass die Auslassöffnung in einer zweiten Richtung zueinander versetzt ist.

Um eine gleichmäßige Veränderung der Luftströmung in den Laufbereich zu erreichen, kann die Verstellvorrichtung derart ausgebildet sein, dass eine Schließbewegung des Verschlusselements dazu führt, dass die Strömungsquerschnitte der Einlässe entlang der Reihe nacheinander verringert werden.

Die Verringerung des Strömungsquerschnitts erfolgt der Reihe nach von der Mitte ausgehend.

Der Strömungsquerschnitt eines der Kanäle ist beispielsweise immer größer oder, wenn der entsprechende Einlass vollständig geöffnet oder verschlossen ist, gleich dem Strömungsquerschnitt eines anderen Kanals, der weiter vorne in der Reihe angeordnet ist, insbesondere dem Kanal unmittelbar davor.

Der Strömungsquerschnitt kann verringert werden, bis der Einlass verschlossen ist.

In einer Ausgestaltung ist die Verstellvorrichtung derart ausgebildet, dass das Verschlusselement linear bewegt wird und/oder senkrecht oder parallel zur Richtung der Reihe bewegt wird, wodurch eine Bewegung des Verschlusselements auf einfache Weise möglich ist.

Damit das Verschlusselement die Einlässe noch besser abdichtet, kann die Verstellvorrichtung eine Halterung für das Verschlusselement aufweisen, an der das Verschlusselement aufgehängt ist, insbesondere mit horizontalem Spiel.

Das Verschlusselement ist insbesondere nur durch die Halterung gehalten, beispielsweise an seinem oberen Ende, wodurch der übrige Teil des Verschlusselements im Rahmen der Beweglichkeit des Materials des Verschlusselements selbst frei beweglich ist.

In einer Ausführungsform weist die Verstellvorrichtung einen Aktuator, insbesondere einen Elektromotor, für das Verschlusselement auf, wobei die Verstellvorrichtung derart ausgebildet ist, dass der Aktuator das Verschlusselement zwischen den verschiedenen Stellungen bewegen kann. Auf diese Weise ist eine automatische Veränderung der Luftströmung möglich. Der Motor ist insbesondere ein Servomotor.

Zum Beispiel weist die Verstellvorrichtung eine Mechanik auf, die die Rotationsbewegung des Aktuators in eine lineare Bewegung des Verschlusselements bzw. der Halterung überträgt. Die Mechanik kann zudem das Verschlusselement bzw. die Halterung tragen.

Um die Strömungsquerschnitte noch gezielter verändern zu können, können die Einlässe in der gleichen Ebene angeordnet und/oder das Verschlusselement kann eine Platte oder Matte, insbesondere ein Blech, sein.

Das Verschlusselement ist insbesondere einstückig. Das Verschlusselement hat beispielsweise eine Dicke von weniger als 2 mm, beispielsweise 0,5 mm und/oder ist aus Federstahl.

Für eine besonders luftdichte Abdeckung der Einlässe kann an die Einlässe angrenzend eine Auflagefläche für das Verschlusselement angeordnet sein, insbesondere wobei die Auflagefläche durch ein einstückiges Blech gebildet ist.

Das Blech für die Auflagefläche ist beispielsweise an einem Kragen des Kanals befestigt, insbesondere geklebt.

Ferner wird die Aufgabe gelöst durch eine Reckanlage, insbesondere eine Quer-, Längs- und/oder Simultan-Reckanlage, mit einem Ofen und wenigstens einer verstellbaren Luftdüse, wie zuvor beschrieben.

Die zur Luftdüse beschriebenen Merkmale und Vorteile gelten gleichermaßen für die Reckanlage und umgekehrt.

Beispielsweise ist im Ofen ein Laufbereich für eine Folie definiert, und die wenigstens eine verstellbare Luftdüse ist unterhalb oder oberhalb des Laufbereichs angeordnet, wobei die Auslassöffnungen der wenigstens einen verstellbaren Luftdüse zum Laufbereich hin orientiert sind.

Insbesondere sind mehrere verstellbare Luftdüsen wie zuvor beschrieben vorgesehen, wobei die verstellbaren Luftdüsen alle unterhalb oder alle oberhalb des Laufbereichs angeordnet sind. Denkbar ist auch, dass eine oder mehrere der verstellbaren Luftdüsen unterhalb und eine oder mehrere der verstellbaren Luftdüsen oberhalb des Laufbereichs angeordnet sind.

Es ist denkbar, dass die verstellbaren Luftdüsen in Laufrichtung paarweise angeordnet sind, wobei die verstellbaren Luftdüsen eines Paares in der Mitte aneinander angrenzen oder in der Mitte einen Abstand voneinander aufweisen.

Beispielsweise hat die Reckanlage einen Kompressor, der dazu ausgebildet ist, Luft zur Lufteintrittsöffnung bzw. in den Stauraum zu fördern.

In einer Ausgestaltung ist die erste Richtung senkrecht zu einer Laufrichtung der Folie im Laufbereich, wobei die Verstellvorrichtung derart ausgebildet ist, dass bei einer Schließbewegung des Verschlusselements zunächst die Kanäle näher zur Mitte verschlossen werden. Auf diese Weise können die Randbereiche stärker temperiert werden.

Die Luftdüse erstreckt sich beispielsweise von außen senkrecht zur Laufrichtung unter bzw. oberhalb des Laufbereichs in Richtung zur Mitte hin.

In einer Ausführungsform weist die Reckanlage ein Transportsystem für die Folie auf, wobei das Folientransportsystem zwei Folientransportschienen aufweist, die senkrecht zur Laufrichtung beweglich sind, wobei die eine oder die mehreren verstellbaren Luftdüsen zusammen mit einer der Folientransportschienen beweglich ausgebildet sind. Auf diese Weise wird sichergestellt, dass stets der Bereich an der Transportschiene temperiert wird.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1: eine schematische Ansicht einer Reckanlage gemäß einer Ausführungsform der Erfindung mit einer verstellbaren Luftdüse gemäß einer Ausführungsform der Erfindung,
- Fig. 2, 3: Schnitte durch eine der verstellbaren Luftdüsen entlang der Querrichtung bzw. der Laufrichtung der Reckanlage gemäß Figur 1,
- Fig. 4: eine schematische Vergrößerung der Figur 3 um einen Einlass herum,
- Fig. 5, 6: einen vereinfachten vergrößerten Ausschnitt der Figur 2 in verschiedenen Stellungen des Verschlusselements,
- Fig. 7: einen Ausschnitt der Figur 1 mit eingezeichneten Strömungsprofilen,
- Fig. 8, 9: Schnittansichten entsprechend denen der Figuren 2 und 3 einer zweiten Ausführungsform einer verstellbaren Luftdüse,
- Fig. 10a-c: Schnitte gemäß denen der Figur 3 einer dritten, vierten und fünften Ausführungsform einer erfindungsgemäßen verstellbaren Luftdüse.

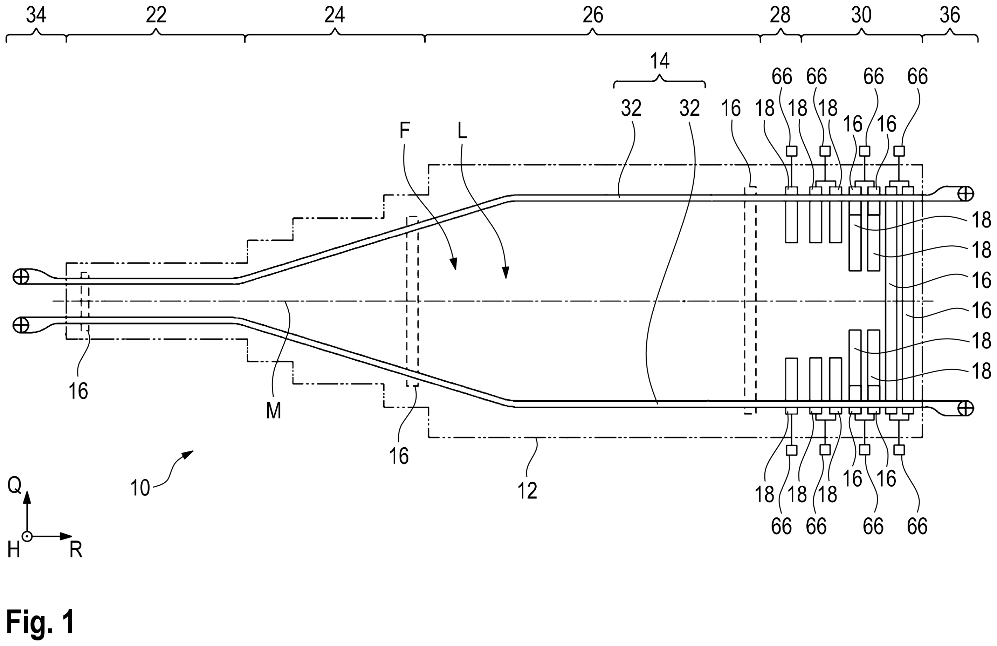

In Figur 1 ist äußerst schematisch eine Reckanlage 10 gemäß der Erfindung dargestellt.

Im gezeigten ersten Ausführungsbeispiel ist die Reckanlage 10 eine Querreckanlage, auch TDO ("Transverse Direction Orienter") genannt. Denkbar ist auch, dass die Reckanlage eine Längs- oder Simultan-Reckanlage ist.

Die Reckanlage 10 weist einen Ofen 12, ein Folientransportsystem 14, statische Luftdüsen 16 und wenigstens eine verstellbare Luftdüse 18 auf.

Der Ofen 12 hat eine Laufrichtung R, die der Bewegungsrichtung der zu reckenden Folie F entspricht. Quer zur Laufrichtung R und horizontal verläuft die Querrichtung Q des Ofens 12 und vertikal die Hochrichtung H.

Der Ofen 12 hat entlang der Laufrichtung R verschiedene Zonen zur Behandlung der zu reckenden Folie F.

In der ersten Zone, Vorheizzone 22, wird die Folie F erwärmt. In der anschließenden zweiten Zone, Reckzone 24, wird die Folie F in Querrichtung Q gereckt, sodass sie zum Ende der Reckzone 24 eine größere Breite aufweist als zu Beginn.

Nach erfolgter Reckung durchläuft die Folie F dann eine dritte Zone, Annealingzone 26 (auch "Wärmebehandlungszone" oder "Weiterheizzone" genannt), bei der eine Relaxierung der Folie F bei hohen Temperaturen erfolgen kann.

Anschließend verläuft die Folie F durch eine vierte Zone, Neutralzone 28, und eine fünfte Zone, Kühlzone 30, wobei die Folie F in der Kühlzone 30 abgekühlt wird. Die Neutralzone 28 dient zur Trennung der Annealingzone 26 und der Kühlzone 30.

Das Folientransportsystem 14 umfasst, in an sich bekannter Weise, zwei Folientransportschienen 32, die gegenüber einer Mittelebene der Reckanlage 10 bzw. des Ofens 12 in einem Abstand angeordnet sind und die sich zumindest teilweise im Ofen 12 erstrecken.

In einer Einlaufzone 34 sowie einer Auslaufzone 36, in denen die Folie F der Reckanlage 10 zu- bzw. abgeführt wird, verlaufen die Folientransportschienen 32 außerhalb des Ofens 12.

Die Folie F wird in an sich bekannter Weise durch Kluppen (nicht dargestellt) des Folientransportsystems 14, die entlang der Folientransportschienen 32 geführt werden, gegriffen und in Laufrichtung R durch den Ofen 12 transportiert.

Auf diese Weise wird durch die Folientransportschienen 32 ein Laufbereich L im Ofen 12 definiert, in dem die Folie F durch den Ofen 12 transportiert wird. Die Breite des Laufbereichs L in Querrichtung Q ist so breit wie die Folie F, und die Mitte des Laufbereichs L in Querrichtung Q entspricht der Mitte M.

Die Folie F wird zum Beispiel mit hohen Geschwindigkeiten, beispielsweise Geschwindigkeiten zwischen 50 und 1.000 m/min, durch den Ofen 12 gezogen.

Zum Temperieren des Ofens 12 bzw. der Folie F kommen die statischen Luftdüsen 16 und die verstellbaren Luftdüsen 18 zum Einsatz, die sich in jeweils in Querrichtung Q erstrecken und in Laufrichtung R hintereinander angeordnet sind. Die statischen Luftdüsen 16 und die verstellbaren Luftdüsen 18 weisen jeweils eine Vielzahl an Auslassöffnungen auf, die zur Folie F hin orientiert sind. Durch die statischen Luftdüsen 16 und die verstellbaren Luftdüsen 18 wird temperierte Luft geführt, die durch die Auslassöffnungen in Richtung zur Folie F strömt und diese erwärmt oder kühlt.

Die statischen Luftdüsen 16 sind zum Beispiel in der Vorheizzone 22, der Reckzone 24, der Annealingzone 26 und teilweise auch in der Kühlzone 30 angeordnet. In Figur 1 ist der Übersicht halber nur eine der statischen Luftdüsen 16 der Vorheizzone 22, der Reckzone 24 und der Annealingzone 26 gestrichelt angedeutet. Die statischen Luftdüsen 16 sind unterhalb und oberhalb des Laufbereichs L angeordnet.

Die statischen Luftdüsen 16 sind, wie aus dem Stand der Technik bekannt, aufgebaut. Insbesondere wird die Folie F durch die statischen Luftdüsen 16 über ihre gesamte Breite mit Luft beströmt.

Im Gegensatz dazu sind die verstellbaren Luftdüsen 18 dahingehend verstellbar, dass der Luftstrom aus verschiedenen Auslassöffnungen 38 der gleichen verstellbaren Luftdüse 18 verstellbar ist.

Die verstellbaren Luftdüsen 18 sind beispielsweise, wie im gezeigten Ausführungsbeispiel, in der Neutralzone 28 und/oder der Kühlzone 30 angeordnet, insbesondere am Ende der Neutralzone 28 und/oder am Anfang der Kühlzone 30.

Die verstellbaren Luftdüsen 18 sind alle unterhalb oder alle oberhalb des Laufbereichs L angeordnet. Denkbar ist auch, dass eine oder mehrere der verstellbaren Luftdüsen 18 unterhalb und eine oder mehrere der verstellbaren Luftdüsen 18 oberhalb des Laufbereichs L angeordnet sind.

Die Auslassöffnungen 38 der verstellbaren Luftdüsen 18 sind ebenfalls zum Laufbereich L hin orientiert.

Die verstellbaren Luftdüsen 18 erstrecken sich von außen in Querrichtung Q in Richtung zur Mitte M hin. Beispielsweise sind die verstellbaren Luftdüsen 18 in Laufrichtung R paarweise angeordnet, wobei die verstellbaren Luftdüsen 18 eines Paares in der Mitte M aneinander angrenzen oder in der Mitte M einen Abstand voneinander aufweisen.

Die eine, mehrere oder alle der verstellbaren Luftdüsen 18 können beispielsweise zusammen mit einer der Folientransportschienen 32 beweglich ausgebildet sein.

Im Folgenden wird eine der verstellbaren Luftdüsen 18 genauer beschrieben, wobei im Rahmen dieser Offenbarung zur Vereinfachung anstelle von "verstellbarer Luftdüse" auch lediglich von "Luftdüse" gesprochen wird. Die bereits bekannten statischen Luftdüsen werden stets als "statische Luftdüsen" bezeichnet, um Verwechslungen auszuschließen.

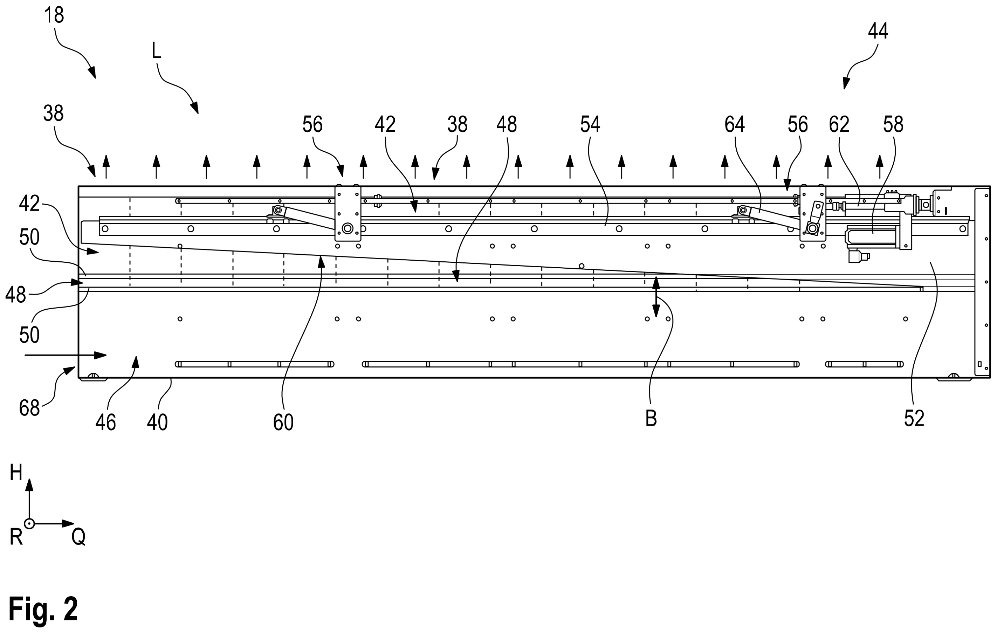

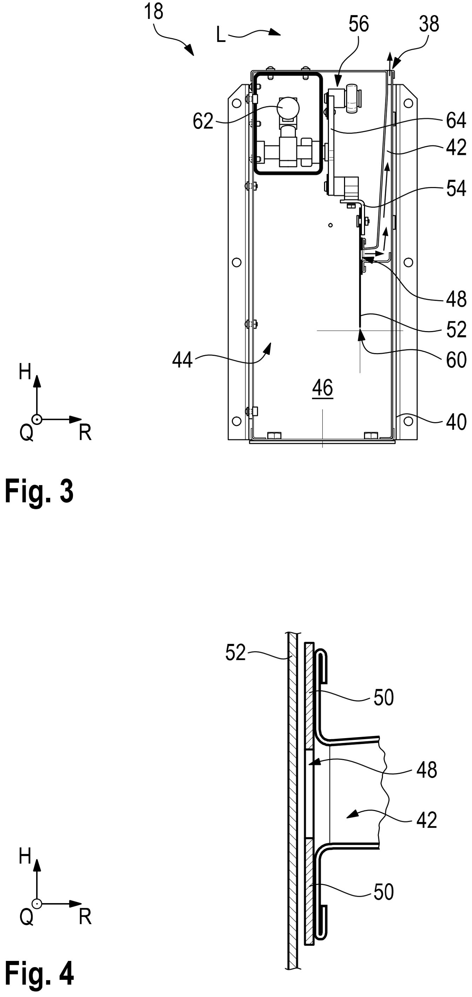

Die Figuren 2 und 3 zeigen eine der Luftdüsen 18 in einem Schnitt entlang der Querrichtung Q bzw. entlang der Laufrichtung R.

Die Luftdüse 18 weist neben den Auslassöffnungen 38 ein Gehäuse 40, mehrere Kanäle 42 sowie eine Verstellvorrichtung 44 auf.

Das Gehäuse 40 ist beispielsweise, wie in den Figuren 2 und 3 gezeigt, quaderförmig ausgebildet und hat eine Oberseite (in den Figuren 2 und 3 die nach oben gerichtete Seite), in denen die Auslassöffnungen 38 vorgesehen sind.

Die Länge des Gehäuses 40 in Querrichtung Q der Reckanlage 10 liegt beispielsweise zwischen 2 und 4 m, insbesondere bei 2,4 m.

Die Auslassöffnungen 38 sind in einer Reihe angeordnet, die sich in eine erste Richtung erstreckt. Diese erste Richtung entspricht beispielsweise der Querrichtung Q der Reckanlage 10 (vgl. Figur 4).

Das Gehäuse 40 ist hohl ausgeführt, sodass innerhalb des Gehäuses 40 ein Stauraum 46 ausgebildet ist. Zudem verlaufen die Kanäle 42 beispielsweise innerhalb des Gehäuses 40.

Beispielsweise ist jeder der Auslassöffnungen 38 ein Kanal 42 zugeordnet, durch den Luft aus dem Inneren des Gehäuses 40 zur Auslassöffnung 38 geleitet wird.

Die Kanäle 42 sind wie die Auslassöffnungen 38 in der ersten Richtung in einer Reihe nebeneinander angeordnet.

Die Kanäle 42 bzw. eine oder mehrerer ihrer Wände sind beispielsweise durch Bleche gebildet, die sich durchgängig in die erste Richtung erstrecken und im Gehäuse 40 befestigt sind. Auch eine Wand des Gehäuses 40 kann eine Wandung der Kanäle 42 bilden.

Die Kanäle 42 sind fluidisch voneinander getrennt, sodass auch jede der Auslassöffnungen 38 nur mit einem der Einlässe 48 fluidisch in Verbindung steht.

Zur Trennung der Kanäle 42 können Stege vorgesehen sein.

Entsprechend sind auch die Einlässe 48 in einer Reihe in erster Richtung angeordnet und liegen beispielsweise alle innerhalb der gleichen Ebenen.

Die Mündung des Kanals am ersten Ende und somit auch der Einlass 48 ist orthogonal zur Auslassöffnung 38 des Kanals 42 orientiert. Die Luft strömt somit horizontal in den Kanal 42 ein. Die Angaben "vertikal" und "horizontal" beziehen sich dabei auf den Erdboden, wenn die Luftdüse 18 ordnungsgemäß aufgebaut ist (wie in den Figuren 2 und 3 dargestellt ist).

Die Kanäle 42 sind insbesondere identisch ausgeführt, sodass lediglich einer der Kanäle 42 im Folgenden beschrieben ist.

Wie in Figur 3 gut zu erkennen, hat der Kanal 42 ein erstes Ende und ein zweites Ende.

Das zweite Ende des Kanals 42 ist in die Umgebung des Gehäuses 40, also in den Ofen 12, hin geöffnet und kann die Auslassöffnung 38 des Kanals 42 darstellen.

Das erste Ende des Kanals 42 mündet in den Stauraum und bildet somit einen Einlass 48 des Kanals 42.

Der Einlass 48 ist in Hochrichtung H beabstandet von der Oberseite des Gehäuses 40 ausgebildet. Beispielsweise ist der Abstand größer als ein Viertel, insbesondere größer als ein Drittel der Höhe des Gehäuses 40.

Der Kanal 42 verläuft beispielsweise von seinem ersten Ende ausgehend zunächst horizontal und anschließend vertikal nach oben. Der Kanal kann sich, wie im gezeigten Ausführungsbeispiel, im vertikal nach oben laufenden Abschnitt zur Auslassöffnung 38 hin verjüngen.

Der Kanal 42 hat im Querschnitt somit eine L-Form.

An den Einlass 48 oben und unten angrenzend ist beispielsweise, wie in Figur 4 dargestellt, eine Auflagefläche 50 angeordnet. Die Auflagefläche 50 ist beispielsweise ein von den Wandungen des Kanals 42 separates Bauteil, das an einem Kragen am ersten Ende des Kanals 42 befestigt ist, beispielsweise geklebt.

Die Auflagefläche 50 ist beispielsweise für die Einlässe 48 sämtlicher Kanäle einstückig ausgebildet, beispielsweise durch ein einstückiges Blech, das sich in die erste Richtung erstreckt und in dem Öffnungen entsprechend den Einlässen 48 ausgebildet sind. Denkbar ist, dass das Blech vertikale Stege über die Einlässe 48 aufweist, wodurch die Stabilität erhöht wird.

Die Verstellvorrichtung 44 weist ein bewegliches Verschlusselement 52, eine Halterung 54, eine Antriebsvorrichtung 56 sowie einen Aktuator 58 auf.

Beispielsweise ist die Verstellvorrichtung 44 vollständig innerhalb des Gehäuses 40 angeordnet. Denkbar ist jedoch auch, dass einzelne Teile außerhalb des Gehäuses 40 angeordnet sein können, insbesondere der Aktuator 58 und Teile der Antriebsvorrichtung 56.

Insbesondere ist jedoch das Verschlusselement 52 innerhalb des Gehäuses 40 angeordnet.

Das Verschlusselement 52 ist flächig ausgebildet, beispielsweise eine Matte oder Platte. Im gezeigten Ausführungsbeispiel ist das Verschlusselement 52 ein Blech.

Das Verschlusselement 52 kann ein Blech mit einer Dicke von weniger als 2 mm, beispielsweise mit einer Dicke von 0,5 mm, sein und ist aus Federstahl hergestellt.

Denkbar sind ebenfalls andere Materialien für das Verschlusselement 52.

Wie in Figur 2 zu sehen, erstreckt sich das Verschlusselement 52 in Hochrichtung H sowie in die erste Richtung bzw. Querrichtung Q entlang aller Kanäle 42. Das Verschlusselement 52 ist im gezeigten Ausführungsbeispiel somit einstückig für sämtliche Kanäle 42 ausgebildet.

Denkbar ist ebenfalls, dass das Verschlusselement nicht einstückig ausgeführt ist, sodass Teile des Verschlusselements für lediglich einen oder mehrere der Kanäle 42 vorgesehen sind und andere Teile des Verschlusselements für andere Kanäle 42.

Das Verschlusselement 52 wird durch die Halterung 54 in einer Ebene gehalten, die parallel zur Ebene der Einlässe 48 ist und die sich unmittelbar vor den Einlässen 48 erstreckt. Beispielsweise wird die Ebene, in der sich das Verschlusselement 52 befinden kann, einseitig durch die Auflageflächen 50 der Kanäle 42 begrenzt.

Beispielsweise erfolgt die Befestigung des Verschlusselements 52 in der Halterung 54 mit horizontalem Spiel, sodass kleine Bewegungen unterhalb von 5 mm erlaubt sind.

Das Verschlusselement 52 ist beispielsweise mit seiner Oberkante an der Halterung 54 aufgehängt und im Übrigen ohne Befestigung, sodass das Verschlusselement 52, insbesondere die Unterkante des Verschlusselements 52, beweglich ist.

Wie in Figur 2 zu sehen, ist die Unterkante des Verschlusselements 52 nicht horizontal, sondern verläuft in einem von 0° verschiedenen Winkel zur Querrichtung Q und zur Hochrichtung H. Der Winkel beträgt beispielsweise zwischen 2° und 5°, maximal jedoch 20°.

Die untere Kante 60 ist dabei zur Mitte M hin niedriger als am äußeren Ende der Luftdüse 18.

Beispielsweise hat die untere Kante 60 eine kontinuierliche Steigung. Denkbar ist jedoch auch, dass die untere Kante 60 eine oder mehrere Stufen hat.

Die Halterung 54 ist an der Antriebsvorrichtung 56 befestigt, die wiederum mit dem Aktuator 58 verbunden ist.

Der Aktuator 58 ist beispielsweise ein Elektromotor, wie ein Servomotor.

Die Antriebsvorrichtung 56 weist einen Gewindetrieb 62 sowie ein, zwei oder mehr Hebelsysteme 64 auf. Der Gewindetrieb 62 ist einerseits mit dem Aktuator 58 sowie andererseits mit wenigstens einem der Hebelsysteme 64 verbunden.

Die Halterung 54 wiederum ist an dem Hebelsystem 64 befestigt. Die Antriebsvorrichtung 56 trägt beispielsweise die Halterung 54 und das Verschlusselement 52 vollständig.

Denkbar ist auch, dass der Antrieb, also die Antriebsvorrichtung 56 und der Aktuator 58, als pneumatischer oder hydraulischer Antrieb ausgebildet sind.

Mittels des Aktuators 58 und der Antriebsvorrichtung 56 kann die Halterung 54 und damit das Verschlusselement 52 bewegt werden, beispielsweise linear.

Die Bewegung erfolgt beispielsweise, wie in der ersten Ausführungsform gezeigt, in eine Bewegungsrichtung B, die im ersten Ausführungsbeispiel senkrecht zur ersten Richtung und somit vertikal ist.

Das Verschlusselement 52 kann somit mittels des Aktuators 58 in verschiedene Stellungen gebracht werden, wobei eine Bewegung nach unten einer Schließbewegung und eine Bewegung nach oben einer Öffnungsbewegung entspricht.

Bei der Schließbewegung werden zunächst die Kanäle 42 bzw. die Einlässe 48 näher zur Mitte M hin verschlossen.

Während des Betriebs der Luftdüse wird Luft in den Stauraum 46 des Gehäuses 40 eingebracht.

Hierzu weist die Reckanlage 10 einen oder mehrere Kompressoren 66 auf, die Luft aus der Umgebung der Reckanlage 10 aufnehmen und über eine Lufteintrittsöffnung 68 der Luftdüse 18 in den Stauraum 46 einbringen.

Die Lufteintrittsöffnung 68 kann dabei an der von der Mitte M abgewandten Stirnseite des Gehäuses 40 vorgesehen sein.

Auf diese Weise wird im Stauraum 46 ein Überdruck erzeugt, sodass Luft aus dem Stauraum 46 durch die Einlässe 48 in die Kanäle 42 strömt und aus den Auslassöffnungen 38 austritt.

Dabei kann Luft aus dem Stauraum 46 nur in dem Maße in Einlässe 48 hineinströmen, wie sie nicht von dem Verschlusselement 52 verschlossen werden. Diese resultierende Öffnung wird im Rahmen dieser Offenbarung als Strömungsquerschnitt des entsprechenden Einlasses 48 bezeichnet.

Die Größe des Strömungsquerschnitts des Einlasses bestimmt die Menge an Luft, die aus der Auslassöffnung 38 des Kanals 42 in den Laufbereich L strömt.

Liegt die untere Kante 60 des Verschlusselements 52 unterhalb eines Einlasses 48 eines der Kanäle 42, liegt das Verschlusselement 52 auf den Auflageflächen 50 an und verschließt somit den Einlass 48.

Der Überdruck im Stauraum 46 führt dazu, dass das Verschlusselement 52 gegen die Auflagefläche 50 gedrückt wird, wodurch der Einlass 48 besonders dicht verschlossen wird.

Sofern die untere Kante 60 des Verschlusselements 52 über die gesamte Länge des Einlasses 48 in der ersten Richtung unterhalb des Einlasses 48 liegt, ist der Einlass 48 vollständig verschlossen. Die entsprechende Auslassöffnung 38 ist somit inaktiv, und es strömt keine Luft an dieser Stelle aus dem Gehäuse 40 bzw. der Luftdüse 18 aus.

Liegt hingegen die untere Kante 60 des Verschlusselements 52 vollständig oberhalb des Einlasses 48, so ist der Einlass 48 vollständig geöffnet, und der volle Strömungsquerschnitt des Einlasses 48 steht zur Verfügung. Die Luft strömt somit durch den vollen Strömungsquerschnitt in den Kanal 42 hinein und aus der entsprechenden Auslassöffnung 38 hinaus. Die Auslassöffnung 38 ist somit aktiv.

Denkbar ist auch, dass das Verschlusselement 52 nur einen Teil des Einlasses 48 abdeckt, wenn die untere Kante 60 im Bereich des Einlasses 48 liegt. In diesem Fall ist der Strömungsquerschnitt des Einlasses 48 verringert, sodass entsprechend weniger Luft durch den zugehörigen Kanal 42 und die Auslassöffnung 38 strömt.

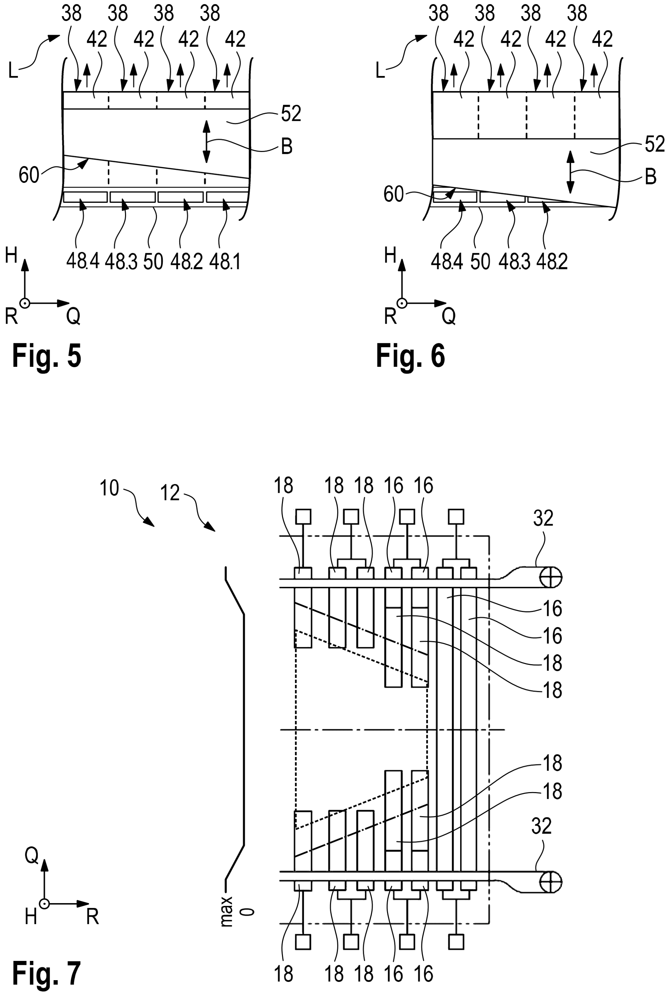

Dieses Funktionsprinzip ist anhand der Figuren 5 und 6 dargestellt, die schematisch und vereinfacht einen Ausschnitt aus Figur 2 in verschiedenen Stellungen des Verschlusselements 52 zeigen. In der in Figur 5 gezeigten Stellung befindet sich das Verschlusselement 52 oberhalb aller dargestellten Einlässe 48, sodass alle in Figur 5 gezeigten Einlässe 48 vollständig geöffnet sind. Sämtliche zugehörigen Auslassöffnungen 38 sind somit aktiv.

In Figur 6 hingegen wurde das Verschlusselement 52 durch eine Schließbewegung in eine zweite Stellung verschoben, in der die untere Kante 60 des Verschlusselements 52 nun unterhalb des Einlasses 48.1 liegt, der in Figur 6 der Mitte M am nächsten ist (d.h. dem rechten Einlass 48). Dieser Einlass 48.1 ist somit vollständig verschlossen, und die zugehörige Auslassöffnung 38 ist inaktiv. Der an diesen Einlass 48.1 der Reihe nach angrenzende nächste Einlass 48.2 der Reihe (zweiter von rechts in Figur 6) ist durch das Verschlusselement 52 nicht vollständig verschlossen, da an seinem von der Mitte M abgewandten Ende (linkem Ende) die untere Kante 60 nicht unterhalb des Einlasses 48.2 liegt. Der Strömungsquerschnitt dieses Einlasses 48.2 ist jedoch deutlich verringert, sodass der Luftstrom durch die entsprechende Auslassöffnung 38 gering ist.

Der an diesen Einlass 48.2 angrenzende nächste Einlass 48.3 der Reihe an Einlässen (dritter Einlass von rechts) ist ebenfalls teilweise vom Verschlusselement 52 verschlossen, sodass der Strömungsquerschnitt dieses Einlasses 48.3 ebenfalls geringer ist als der eines vollständig geöffneten Einlasses 48. Der Strömungsquerschnitt des Einlasses 48.3 ist jedoch größer als der Strömungsquerschnitt des weiter verschlossenen Einlasses 48.2, der weiter zur Mitte M hin liegt.

Insbesondere ist der Strömungsquerschnitt des Einlasses 48.3 größer als die Strömungsquerschnitte sämtlicher der Kanäle 42, die weiter zur Mitte M hin liegen, wie die Einlässe 48.1 und 48.2.

Dies setzt sich weiter fort, da der Strömungsquerschnitt des Einlasses 48.4, der unmittelbar an den Einlass 48.3 angrenzt, aber weiter von der Mitte M entfernt ist, größer ist als derjenige des Einlasses 48.3. Die Schließbewegung von der Stellung in Figur 5 zur Stellung in Figur 6 hat somit dazu geführt, dass die Strömungsquerschnitte der Einlässe 48 entlang der Reihe nacheinander verringert worden sind.

Wird die Schließbewegung fortgesetzt, d.h. das Verschlusselement 52 weiter nach unten bewegt, so werden die Strömungsquerschnitte der Einlässe 48.2, 48.3 und 48.4 weiter verringert, bis sie schließlich, wie Einlass 48.1, vollständig verschlossen sind.

Insbesondere sind lediglich im vollständig geöffneten und vollständig verschlossenen Zustand die Strömungsquerschnitte von angrenzenden Einlässen 48 gleich. Folglich kann durch das Verschlusselement 52 in unterschiedlichen Stellungen eine unterschiedliche Anzahl an Einlässen 48 verschlossen werden und außerdem die Strömungsquerschnitte der Einlässe 48 verringert werden, wodurch die Luftdüse 18 bzw. der Luftstrom aus der Luftdüse 18 verstellbar ist.

Figur 7 zeigt die Anordnung der verstellbaren Luftdüsen 18 und der statischen Luftdüsen 16 am Ende der Neutralzone 28 und der Kühlzone 30 nochmals vergrößert.

Dabei sind die Luftdüsen 18 des ersten Paares an Luftdüsen 18 in der Neutralzone, gefolgt von zwei weiteren Paaren an verstellbaren Luftdüsen 18.

Die in Laufrichtung R anschließenden zwei weiteren Paare von verstellbaren Luftdüsen 18 sind zur Mitte M hin versetzt, wobei jeweils an ihrer Außenseite eine statische Luftdüse 16 vorgesehen ist. Diese Kombination aus einer verstellbaren Luftdüse 18 und einer statischen Luftdüse 16 kann als eine gemeinsame Luftdüse angesehen werden, bei der der Luftstrom lediglich über einen Teil der Ausdehnung der Luftdüse verstellbar ist.

An diese beiden Paare von Luftdüsen anschließend sind zwei statische Luftdüsen 16, wie aus dem Stand der Technik bekannt, vorgesehen. Denkbar ist zudem, dass die Kühlzone 30 länger ist und weitere statische Luftdüsen 16 folgen.

In Figur 7 ist punktiert ein Bereich um die Mitte M dargestellt, in dem keine Luft in den Laufbereich L bzw. gegen die Folie F geblasen wird, da in diesem Bereich entweder keine Luftdüsen 16, 18 vorhanden sind oder verstellbare Luftdüsen 18 vorhanden sind, die jedoch derart eingestellt sind, dass die Auslassöffnungen 38 in diesem Bereich inaktiv sind.

Außerhalb dieses Bereichs wird Luft in den Laufbereich L bzw. gegen die Folie F geblasen, wobei die entsprechende Luftströmung in den Laufbereich L bzw. gegen die Folie F mit steigendem Abstand von der Mitte M größer wird. Mit strichpunktierter Linie ist die Linie markiert, an der die Luftströmung in den Laufbereich L der Hälfte der maximalen Luftströmung entspricht.

Auf diese Weise wird ein Strömungsprofil in Querrichtung Q erzeugt, wie es in den Graphen auf der linken Seite in Figur 7 dargestellt ist, wobei der Graph das Strömungsprofil der ersten Luftdüse 18 illustriert.

Im weiteren Verlauf in Laufrichtung R verschiebt sich der Graph nach innen.

Auf diese Weise wird erreicht, dass der äußere Abschnitt des Laufbereichs L stärker mit Luft angeströmt wird und beispielsweise stärker gekühlt werden kann. Dadurch kann die Folie, die - wie beschrieben - in den äußeren Abschnitten (insbesondere im Bereich der Kluppen) mehr Kühlung benötigt, in diesen äußeren Abschnitten schneller abgekühlt werden. Dadurch wird die Planarität der hergestellten Folie F verbessert.

Dadurch, dass die Luftströmung durch die verstellbaren Luftdüsen 18 im laufenden Betrieb verstellt werden kann, ist die Herstellung von hochqualitativer Folie unter verschiedenen und auch sich verändernden Bedingungen möglich.

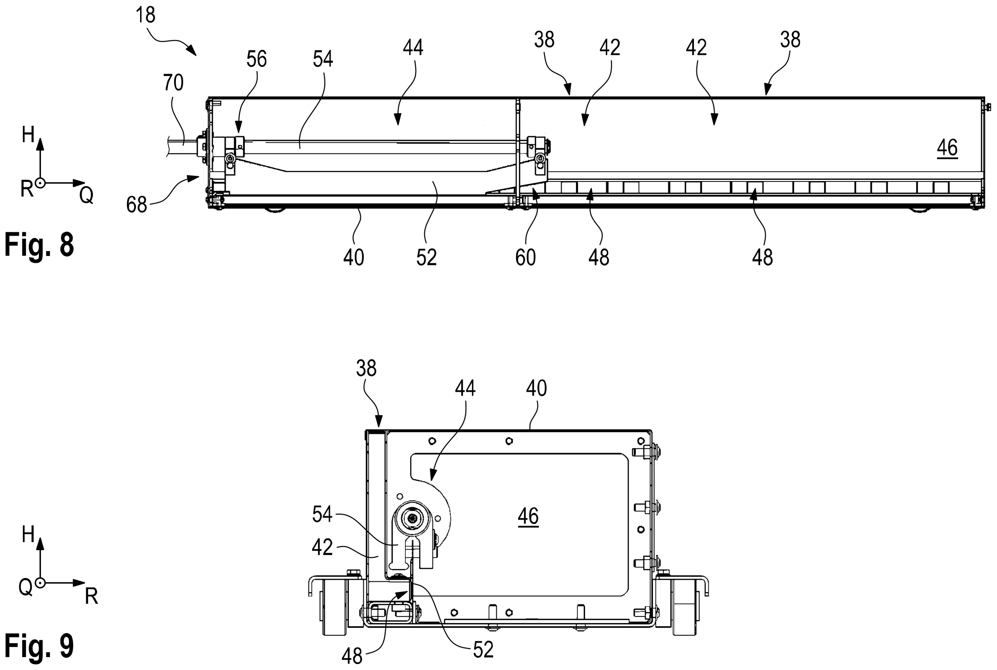

In den Figuren 8 bis 10 sind weitere Ausführungsformen einer verstellbaren Luftdüse 18 dargestellt, die im Wesentlichen der ersten Ausführungsform entsprechen, sodass im Folgenden lediglich auf die Unterschiede eingegangen wird. Gleiche und funktionsgleiche Teile sind mit denselben Bezugszeichen versehen.

Die Figuren 8 und 9 zeigen Ansichten entsprechend denen der Figuren 2 und 3 einer zweiten Ausführungsform einer verstellbaren Luftdüse 18.

Im Unterschied zur ersten Ausführungsform wird das Verschlusselement 52 nicht senkrecht zur ersten Richtung der Reihen an Auslassöffnungen 38 bzw. Einlässen 48 bewegt, sondern parallel dazu.

Im gezeigten Ausführungsbeispiel entspricht die Bewegungsrichtung somit der Querrichtung Q der Reckanlage 10.

Die Bewegung des Verschlusselements 52 kann manuell mittels einer Stange 70 erfolgen, die sich aus dem Gehäuse 40 hinaus erstreckt.

Ebenfalls ist es denkbar, dass das Verschlusselement 52 mittels eines Aktuators betätigt wird.

Auch in dieser zweiten Ausführungsform ist die untere Kante 60 des Verschlusselements 52 angewinkelt, sodass ein kontinuierlicher Anstieg der Luftströmung aus den Auslassöffnungen 38 erzeugt werden kann. Es ist nur ein Abschnitt der unteren Kante 60 angewinkelt, um einen Übergangsabschnitt zu erzeugen.

Einlässe 48 vor dem Übergangsabschnitt (d.h. in Bezug auf Figur 8 rechts des Übergangsabschnitts) sind vollständig geöffnet, und Einlässe 48 nach dem Übergangsabschnitt sind vollständig verschlossen.

Die Abschnitte vor und/oder hinter dem Übergangsabschnitt verlaufen beispielsweise horizontal. Beispielsweise, wie im gezeigten Ausführungsbeispiel, verläuft der überwiegende Teil der unteren Kante 60 des Verschlusselements 52 horizontal.

Wie in Figur 9 zu sehen, befinden sich die Einlässe 48 im unteren Drittel des Gehäuses 40, da es durch die horizontale Bewegung des Verschlusselements 52 nicht notwendig ist, unterhalb der Einlässe 48 einen Bereich zur Aufnahme des Verschlusselements 52 bereitzustellen.

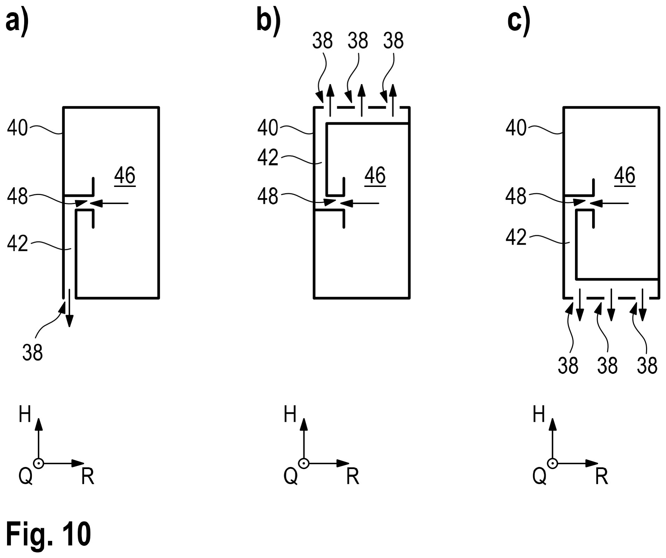

Die Figuren 10a, b und c zeigen stark vereinfachte Querschnitte weiterer Ausführungsformen entsprechend denen der Figuren 3 und 9.

In Figur 10a ist eine dritte Ausführungsform einer Luftdüse 18 dargestellt, die sich von der der ersten Ausführungsform dadurch unterscheidet, dass sich die Auslassöffnungen 38 an der Unterseite des Gehäuses 40 befinden. Eine solche Luftdüse 18 eignet sich somit, oberhalb des Laufbereichs L angeordnet zu werden.

Wie auch in der ersten Ausführungsform können die Halterung 54 und die Antriebsvorrichtung 56 oberhalb der Einlässe 48 angeordnet sein.

In Figur 10b ist eine vierte Ausführungsform dargestellt, die im Wesentlichen der der ersten Ausführungsform entspricht.

Im Unterschied zur ersten Ausführungsform sind mehrere Reihen an Auslassöffnungen 38 vorgesehen, nämlich drei Reihen, die in einer zweiten Richtung versetzt zueinander sind. Entsprechend sind auch die Auslassöffnungen 38 in einer zweiten Richtung versetzt zueinander.

Die zweite Richtung ist beispielsweise die Laufrichtung R.

Wie in Figur 10b zu erkennen, sind Auslassöffnungen 38 mehrerer Reihen am zweiten Ende eines Kanals 42 vorgesehen, werden also mittels des gleichen Einlasses 48 gespeist. Somit ist jede Auslassöffnung 38 weiterhin einem Kanal 42 zugeordnet, jedoch hat ein Kanal 42 nun mehrere Auslassöffnungen 38. Auf diese Weise wird die Breite der Luftströmung in Laufrichtung R vergrößert.

In Figur 10c ist eine fünfte Ausführungsform dargestellt, die der vierten Ausführungsform der Figur 10b entspricht, wobei die Auslassöffnungen 38 ähnlich der dritten Ausführungsform gemäß Figur 10a an der Unterseite des Gehäuses 40 angeordnet sind.

## Patentansprüche

1. Verstellbare Luftdüse für einen Ofen (12) einer Reckanlage (10), insbesondere einer Quer-, Längs- und/oder Simultan-Reckanlage, mit einem Gehäuse (40), mehreren Auslassöffnungen (38), mehreren Kanälen (42) und einer Verstellvorrichtung (44),
wobei innerhalb des Gehäuses (40) ein Stauraum (46) gebildet ist,
wobei die Kanäle (42) jeweils an ihrem ersten Ende einen Einlass (48) aufweisen, der in den Stauraum (46) mündet, und die Kanäle (42) an ihrem zweiten Ende mittels der Auslassöffnungen (38) in die Umgebung des Gehäuses (40), insbesondere in den Ofen (12), münden, und
wobei die Verstellvorrichtung (44) ein bewegliches Verschlusselement (52) zur Veränderung eines Strömungsquerschnitts der Einlässe (48) der Kanäle (42) aufweist, wobei die Verstellvorrichtung (44) derart ausgebildet ist, dass das Verschlusselement (52) zwischen verschiedenen Stellungen bewegt werden kann, wodurch der Strömungsquerschnitt wenigstens eines der Einlässe (48) verändert wird.

2. Luftdüse nach Anspruch 1, **dadurch gekennzeichnet, dass** das Verschlusselement (52) dazu ausgebildet ist, dass es die Einlässe (48) der Kanäle (42) verschließen kann, insbesondere wobei das Verschlusselement (52) in zumindest zwei unterschiedlichen Stellungen eine unterschiedliche Anzahl an Einlässen (48) verschließt.

3. Luftdüse nach Anspruch 1 oder 2, **dadurch gekennzeichnet, dass** das Verschlusselement (52) eine Kante (60) aufweist, die in einem Winkel zur Bewegungsrichtung (B) des Verschlusselements (52) angeordnet ist.

4. Luftdüse nach einem der vorhergehenden Ansprüche, **dadurch gekennzeichnet, dass** die Einlässe (48) der Kanäle (42) orthogonal zu den Auslassöffnungen (38) und/oder vertikal orientiert sind; und/oder dass die Auslassöffnungen (38) an der Oberseite des Gehäuses (40) angeordnet sind.

5. Luftdüse nach einem der vorhergehenden Ansprüche, **dadurch gekennzeichnet, dass** zumindest die Auslassöffnungen (38) in einer oder mehreren Reihen angeordnet sind, insbesondere in einer oder mehreren Reihen in einer ersten Richtung.

6. Luftdüse nach einem der vorhergehenden Ansprüche, **dadurch gekennzeichnet, dass** die Einlässe (48) der Kanäle (42) entlang einer ersten Richtung in einer Reihe angeordnet sind.

7. Luftdüse nach Anspruch 6, **dadurch gekennzeichnet, dass** die Verstellvorrichtung (44) derart ausgebildet ist, dass eine Schließbewegung des Verschlusselements (52) dazu führt, dass die Strömungsquerschnitte der Einlässe (48) entlang der Reihe nacheinander verringert werden.

8. Luftdüse nach Anspruch 7, **dadurch gekennzeichnet, dass** die Verstellvorrichtung (44) derart ausgebildet ist, dass das Verschlusselement (52) linear bewegt wird und/oder senkrecht oder parallel zur Richtung der Reihe bewegt wird.

9. Luftdüse nach einem der vorhergehenden Ansprüche, **dadurch gekennzeichnet, dass** die Verstellvorrichtung (44) eine Halterung (54) für das Verschlusselement (52) aufweist, an der das Verschlusselement (52) aufgehängt ist, insbesondere mit horizontalem Spiel.

10. Luftdüse nach einem der vorhergehenden Ansprüche, **dadurch gekennzeichnet, dass** die Verstellvorrichtung (44) einen Aktuator (58), insbesondere einen Elektromotor, für das Verschlusselement (52) aufweist, wobei die Verstellvorrichtung (44) derart ausgebildet ist, dass der Aktuator (58) das Verschlusselement (52) zwischen den verschiedenen Stellungen bewegen kann.

11. Luftdüse nach einem der vorhergehenden Ansprüche, **dadurch gekennzeichnet, dass** die Einlässe (48) in der gleichen Ebene angeordnet sind und/oder das Verschlusselement (52) eine Platte oder Matte, insbesondere ein Blech, ist.

12. Luftdüse nach einem der vorhergehenden Ansprüche, **dadurch gekennzeichnet, dass** an die Einlässe (48) angrenzend eine Auflagefläche (50) für das Verschlusselement (52) angeordnet ist, insbesondere wobei die Auflagefläche (50) durch ein einstückiges Blech gebildet ist.

13. Reckanlage, insbesondere eine Quer-, Längs- und/oder Simultan-Reckanlage, mit einem Ofen (12) und wenigstens einer verstellbaren Luftdüse (18) nach einem der vorhergehenden Ansprüche.

14. Reckanlage nach Anspruch 13, **dadurch gekennzeichnet, dass** im Ofen (12) ein Laufbereich (L) für eine Folie (F) definiert ist und die wenigstens eine verstellbare Luftdüse (18) unterhalb oder oberhalb des Laufbereichs (L) angeordnet ist, wobei die Auslassöffnungen (38) der wenigstens einen verstellbaren Luftdüse (18) zum Laufbereich (L) hin orientiert sind.

15. Reckanlage nach Anspruch 13 oder 14, **dadurch gekennzeichnet, dass** die erste Richtung senkrecht zu einer Laufrichtung (R) der Folie (F) im Laufbereich (L) ist, wobei die Verstellvorrichtung (44) derart ausgebildet ist, dass bei einer Schließbewegung des Verschlusselements (52) zunächst die Kanäle (42) näher zur Mitte (M) verschlossen werden; und/oder,
dass die Reckanlage (10) ein Folientransportsystem (14) aufweist, wobei das Folientransportsystem (14) zwei Folientransportschienen (32) aufweist, die senkrecht zur Laufrichtung (R) beweglich sind, wobei die eine oder die mehreren verstellbaren Luftdüsen (18) zusammen mit einer der Folientransportschienen (32) beweglich ausgebildet sind.
